# EUROPÄISCHE PATENTSCHRIFT

(11) **EP 1 209 369 B1**
(45) Veröffentlichungstag und Bekanntmachung des Hinweises auf die Patenterteilung: **28.12.2005**
(21) Anmeldenummer: 01121520.9
(22) Anmeldetag: 08.09.2001
(51) Int. Cl.: F16B 2/18, H05K 7/14

(54) **Verriegelungselement und Verriegelungsvorrichtung**
Locking means and locking device
Elément de verrouillage et dispositif de verrouillage

(30) Priorität: 24.11.2000 DE 10058462
(43) Veröffentlichungstag der Anmeldung: 29.05.2002
(73) Patentinhaber: Siemens Schweiz AG, 8047 Zürich (CH)
(72) Erfinder: Bertsch, Rainer, 76437 Rastatt (DE); Weber, Bruno, 75334 Straubenhardt (DE)
(74) Vertreter: Weise, Wolfgang

(56) Entgegenhaltungen:
- DE-A- 2 345 855
- DE-A- 3 213 405
- US-A- 4 472 917

## Beschreibung

Die Erfindung bezieht sich auf ein Verriegelungselement zum Verriegeln von Bauteilen, z.B. Einbaugehäusen, in Aussparungen oder Durchbrechungen von Bauelementen, z.B. Frontplatten von elektrotechnischen Geräten.

Es ist bereits bekannt, Verriegelungselemente mit einem Führungszapfen zum dreh- oder schwenkbaren Befestigen an einem Randbereich des Bauteils sowie mit einer Anschlag- und Haltefläche zum verriegelnden Anschlagen an dem Bauelement zu versehen. Derartige hakenartige Verriegelungselemente sind jedoch hinsichtlich ihrer Einsatzmöglichkeiten auf jeweils ganz bestimmte Dimensionierungen beschränkt.

Ein Verriegelungselement gemäss dem Oberbegriff des Anspruchs 1 ist beispielsweise aus der Druckschrift DE-A-32 13 405 bekannt. Diese offenbart eine Vorrichtung zum Befestigen eines Gehäuses eines elektrischen Gerätes in einer Frontplatte eines Gestelles und umfasst ein Befestigungselement, welches mit einem Führungselement am Gehäuse gehaltert ist und ein Spannelement, das gegen die Frontplatte verspannt ist. Das als Exzenterscheibe ausgebildete Verriegelungselement weist eine kontinuierliche Kontur auf und ist so ausgestaltet, dass es von der Vorderseite der Frontplatte nachträglich einhängbar und verspannbar ist.

Der Erfindung liegt die Aufgabe zugrunde, das Verriegelungselement dahingehend zu verbessern, daß unkontrollierte Kräfte von den Gehäusebauteilen ferngehalten werden und ein und dasselbe Verriegelungselement seine Verriegelungs- und Absperraufgaben auch bei unterschiedlichen Abmessungen des Bauteils bzw. Bauelements erfüllt, bei dem es zur Anwendung gelangt. Dabei sollen keine Werkzeuge erforderlich sein und sollte die Möglichkeit bestehen, das Verriegelungselement als Bestandteil einer Verriegelungsvorrichtung am betreffenden Bauteil oder Bauelement zu belassen, ohne von dort zum Montieren abnehmen zu müssen.

Die Erfindung hinsichtlich des Verriegelungselements ist im Patentanspruch 1 und hinsichtlich einer damit bestückten Verriegelungsvorrichtung im Anspruch 6 gekennzeichnet. Weitere Ausbildungen der Erfindung sind in Unteransprüchen beansprucht. In der Figurenbeschreibung sind besonders bevorzugte Ausbildungsformen graphisch dargestellt.

Gemäß der Erfindung weist das Verriegelungselement mehrere ebene Halteflächen in jeweils unterschiedlichen Abständen vom Führungszapfen bzw. dessen Dreh- oder Schwenkachse auf, die am Rand einer um die Schwenkachse dreh- oder schwenkbaren Scheibe oder Platte angeordnet sind, und die jeweils durch Drehen oder Verschwenken des Verriegelungselements in die betreffende Verriegelungsstellung am Bauelement bringbar sind.

Es empfiehlt sich, wenn Stützzapfen in der gleichen Richtung wie der Führungszapfen von der schwenkbaren Scheibe oder Platte abstehen. Diese Stützzapfen dienen zum Abstützen der Platte oder Scheibe während der Dreh- oder Schwenkbewegung auf insbesondere einer Gleitfläche, die bevorzugt im Randbereich des Bauteils angeordnet ist.

Der Führungszapfen sollte einen geschlitzten Haltebart aufweisen, mit dem er ein Führungselement des Bauteils hintergreift. Die Lagerung für den Führungszapfen ist dabei zweckmäßigerweise ähnlich einem Schlüsselloch ausgebildet, so daß der Führungszapfen mit seinem Bart in einer bestimmten Position eingeführt und dann nach Verschwenken bzw. Drehen gegen Herausziehen gesichert ist.

Es empfiehlt sich, den Führungszapfen insbesondere mittels einer Blattfeder unter Federvorspannung zu setzen und dadurch das Verriegelungselement in Verriegelungsposition zu bringen, so daß die Stützzapfen in Anlage an der Gleitfläche gehalten werden.

Die dreh- oder schwenkbare Platte ist bevorzugt als Exzenterscheibe ausgebildet.

Bei der erfindungsgemäßen Verriegelungsvorrichtung ist der Führungszapfen in eine Aussparung im Randbereich des zur Verriegelungsvorrichtung gehörenden Bauteils derart eingesetzt, daß das Verriegelungselement nicht über diejenigen Außendimensionen des Bauteils hinausreicht, die zum Einsetzen in Aussparungen oder Durchbrechungen des Bauelements nicht überschritten werden dürfen. Dabei dient eine insbesondere elastomere Dichtung, z.B. ein Gummistreifen, als Widerlager für das Bauelement beim Verriegeln durch eine der Halteflächen des Verriegelungselements.

Es empfiehlt sich, die Blattfeder als Zunge am Bauteil im Bereich der Aussparung auszubilden und dafür zu sorgen, daß sie gleichzeitig als Anschlag und Gegenlager für den Führungszapfen dient.

Das Verriegelungselement sollte durch Selbsthemmung in der Aussparung gegen selbsttätiges Lösen gesichert sein.

Ein Ausführungsbeispiel ist anhand der Zeichnung im folgenden näher erläutert. Dabei dienen zeichnerisch dargestellte Merkmale auch ohne wörtliche Beschreibung zur Erläuterung des besonderen Ausführungsbeispiels.

Es zeigen:
- Figur 1: schematisch eine Verriegelungsvorrichtung gemäß der Erfindung an der Ecke eines Einbaugehäuses;
- Figur 2: einen Teil einer Frontplatte mit einer Durchbrechung in welche das Einbaugehäuse einzusetzen ist - und zwar in gegenüber Figur 1 wesentlich verkleinertem Maßstab -;
- Figur 3: einen schematischen Querschnitt A-A durch eine Verriegelungsvorrichtung unter Verwendung eines Verriegelungselements gemäß der Erfindung;
- Figur 4: ein vergrößerter Schnitt des Verriegelungselements von Figur 3;
- Figur 5: eine Aufsicht auf das Verriegelungselement von Figur 3 von oben und
- Figur 6 und 7: eine Ansicht auf das Verriegelungselement von oben und von unten.

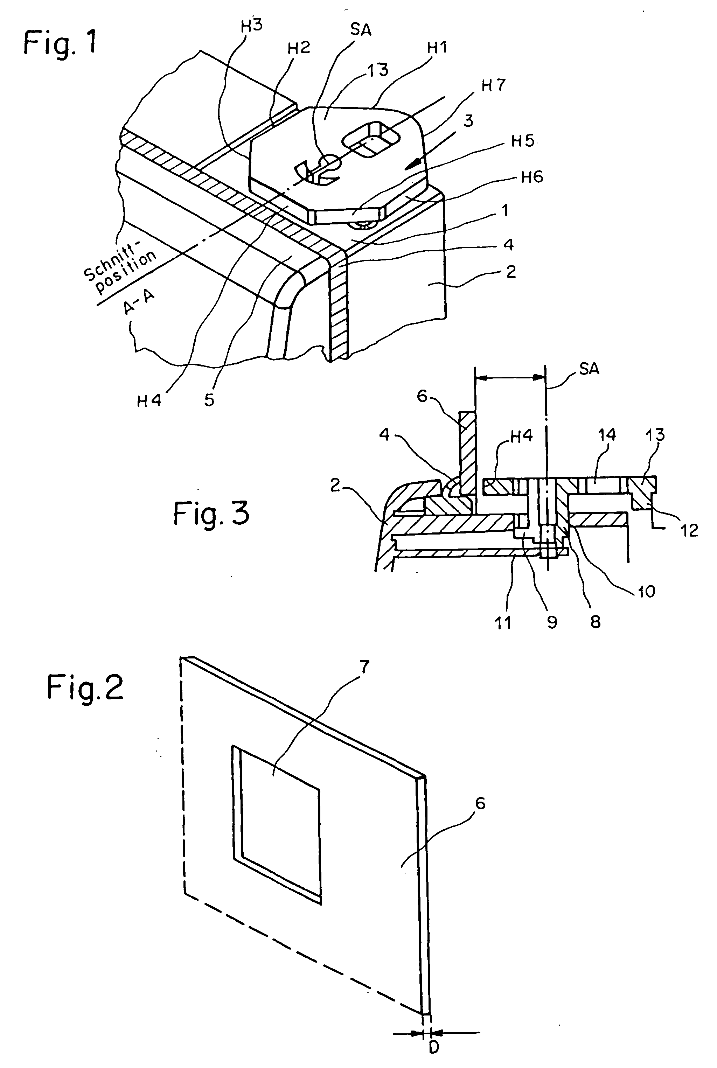

Gemäß Figur 1 ist im Randbereich 1 und zwar an der oberen Ecke eines Bauteils 2 in Form eines Einbaugehäuses das Verriegelungselement 3 angeordnet, das um die hier punktförmig dargestellte Schwenkachse SA schwenkbar ist. Eine um das Einbaugehäuse in Form eines Gummistreifens umlaufende Dichtung 4 stützt sich an einer Randwulst 5 des Bauteiles 2 ab und stellt ein Widerlager für den Rand der Frontplatte des Bauelements 6 dar, in dessen Frontausschnitt bzw. Aussparung oder Durchbrechung 7 das Bauteil 2 einzusetzen ist.

Wie noch deutlicher aus den Figuren 3 bis 5 ersichtlich ist, stützt sich das Einbaugehäuse bzw. Bauteil 2 am die Durchbrechung 7 umlaufenden Rand der Platte bzw. des Bauelements 6 dadurch ab, daß dieser Rand zwischen der Dichtung 4 und einer der Halteflächen H1-H7 eingeklemmt wird. Diese Halteflächen H1-H7 befindet sich im Abstand A₁-A₃ von der Schwenkachse SA des Führungszapfens 8 des Verriegelungselements 3. Der Führungszapfen 8 weist einen elastisch federnden Haltebart 9 auf, der zur Sicherung vor Herausrutschen aus der Aussparung 10 im Bauelement 2 dient. An das Bauelement 2 ist eine als dünnes Blättchen ausgebildete Blattfeder 11 angespritzt, die den Führungszapfen 8 und daher das Verriegelungselement 3 in Figur 3 nach oben vorspannt. Parallel zum Führungszapfen 8 ragen zwei oder mehr Stützzapfen 12 von der dreh- bzw. schwenkbaren Scheibe oder Platte 13 des Verriegelungselements 3 ab, das an der den Halteflächen H1 bis H5 gegenüberliegenden Seite eine Durchbrechung 14 aufweist, welche das Erfassen des Verriegelungselements 3 durch Finger erleichtert.

Aus Figuren 1, 4 und 5 ist ersichtlich, daß sich die Halteflächen H1 bis H7 in unterschiedlichen Abständen A₁ bis A₇ von der Schwenkachse SA befinden. Je nach der vorhandenen Dicke D des Bauelements 6, in dessen Durchbrechungen 7 der Bauteil 2 zu verriegeln ist, wird die angemessenste Haltefläche in die in Figur 1 gezeigte Position gebracht, damit das Bauteil 2, hier ein Einbaugehäuse, genügend fest in der Frontplatte, d.h. dem Bauelement 6, verriegelt wird, wie dies schematisch im Querschnitt in Figur 3 gezeigt ist.

Es empfiehlt sich, am Umfang des Randes des Bauteils 2 jeweils mehrere Verriegelungselemente 3 anzuordnen, beispielsweise zwei Verriegelungselemente an der oberen und zwei an der untere Seite des Einbaugehäuses.

Das Verriegelungselement 3 wird dadurch in seiner Ausgangsposition gehalten, daß es mit seinem Haltebart 9 durch eine Aussparung im Führungszapfen 8 gesteckt und von der Blattfeder 11 unter Spannung gehalten wird.

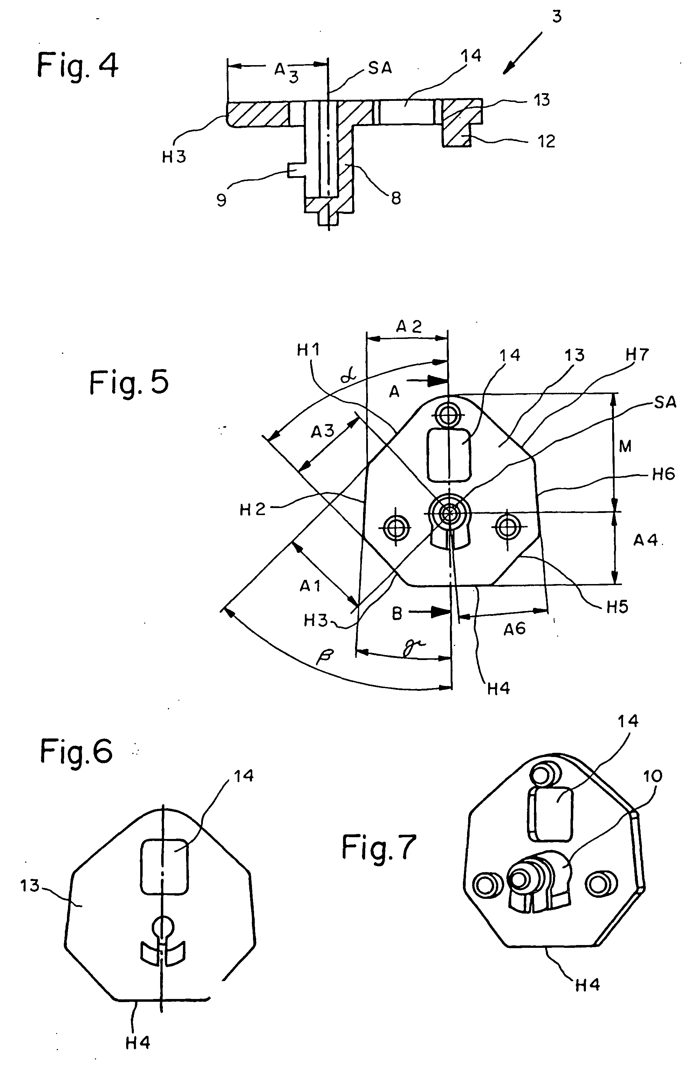

Zur Bedienung wird die Exzenterscheibe 13 beispielsweise mit Hilfe des Zeige- oder Mittelfingers und des Daumens nach innen gedrückt, so daß das Einbaugehäuse, d.h. das Bauteil 2, durch die Durchbrechung 7 der Frontplatte bzw. des Bauelements 6 gesteckt werden kann. Nach dem Anlegen der Dichtung 4 an das Bauelement 6 werden die Verriegelungselemente manuell soweit verschwenkt bzw. verdreht, daß abhängig von der Dicke D der Frontplatte und dem Verpressungsgrad der Dichtung 4 eine gute Verriegelung erfolgt. Da die Verriegelungselemente mit ihren Exzenterscheiben Selbsthemmung aufweisen, können sie sich selbsttätig aus dieser Position nicht lösen, zumal hierzu ein Verschwenken des jeweiligen Verriegelungselements erforderlich wäre, was aber nur unter besonderem Kraftaufwand möglich ist, da die Halteflächen H zweckmäßigerweise ebene Flächen bilden, wie dies insbesondere aus Figur 5 ersichtlich ist.

Die 7 Halteflächen H1-H7 sind in unterschiedlichen Abständen A₁-A₇ von der Schwenkachse SA beabstandet; dabei ergeben sich teilweise gegenüber der Mittellinie ML unterschiedliche Neigungswinkel α, β und χ mit beispielsweise
α = 41,6°
β = 48,4°
χ = 4,5°
bei beispielsweise folgenden Abständen:
A₁ = 11 mm
A₃ = 9 mm
A₄ = 8 mm
A₆ = 10mm.

Die Strecke M beträgt dabei 10,9 mm.

In Figur 6 und 7 sind Ansichten auf das Verriegelungselement 3 bzw. die Exzenterscheibe 13 mit der Durchbrechung 14 und dem Führungszapfen 8 von oben (Fig. 6) und von unten (Fig. 7) gezeigt.

## Patentansprüche

1. Verriegelungselement zum Verriegeln von Bauteilen (2), z.B. Einbaugehäusen, in Aussparungen oder Durchbrechungen (7) von Bauelementen (6), z.B. Wänden oder Platten, mit einem Führungszapfen (8) zum dreh- oder schwenkbaren Befestigen an einem Randbereich (1) des Bauteils (2) und mit einer Anschlag- und Haltefläche (H) zum verriegelnden Anschlagen an dem Bauelement (6), **dadurch gekennzeichnet, daß** das Verriegelungselement mehrere ebene Halteflächen (H1, ... H7) in unterschiedlichen Abständen (A₁, ... A₇) vom Führungszapfen (8) bzw. dessen Dreh- oder Schwenkachse (SA) aufweist, die am Rand einer um die Schwenkachse (SA) dreh- oder schwenkbaren Platte (13) angeordnet sind, und durch Drehen oder Schwenken des Verriegelungselements (3) in Verriegelungsstellung am Bauelement (6) bringbar sind.

2. Verriegelungselement nach Anspruch 1, **dadurch gekennzeichnet, daß** Stützzapfen (12) in der gleichen Richtung wie der Führungszapfen (8) von der schwenkbaren Platte (13) abstehen.

3. Verriegelungslement nach einem der vorhergehenden Ansprüche, **dadurch gekennzeichnet, daß** der Führungszapfen (8) einen federnden Haltebart (9) aufweist, mit dem er ein Führungselement des Bauteils (2) hintergreift.

4. Verriegelungselement nach einem der vorhergehenden Ansprüche, **dadurch gekennzeichnet, daß** der Führungszapfen (8) mittels einer Blattfeder (11) unter Federvorspannung setzbar ist.

5. Verriegelungselement nach einem der Ansprüche 2 bis 4, **dadurch gekennzeichnet, daß** die dreh- oder schwenkbare Platte (13) als Exzenterscheibe ausgebildet ist.

6. Verriegelungsvorrichtung mit einem Verriegelungselement nach einem der vorhergehenden Ansprüche, **dadurch gekennzeichnet, daß** der Führungszapfen (8) in einer Aussparung (10) im Randbereich (1) des zur Verriegelungsvorrichtung gehörenden Bauteils (2) eingesetzt ist, das eine elastomere Dichtung (4) aufweist, welche als Widerlager für das Bauelement (6) beim Verriegeln durch eine der Halteflächen (H1, ... H7) des Verriegelungselements (3) dient.

7. Verriegelungsvorrichtung nach Anspruch 6, **dadurch gekennzeichnet, daß** eine als Blattfeder (11) dienende Zunge am Bauteil (2) im Bereich der Aussparung (10) ausgebildet ist.

8. Verriegelungsvorrichtung nach Anspruch 7, **dadurch gekennzeichnet, daß** die Zunge das Verriegelungselement in Verriegelungs-position bringt und als Anschlag und Gegenlager für den Führungszapfen (8) dient.

9. Verriegelungsvorrichtung nach einem der Ansprüche 6 bis 8, **dadurch gekennzeichnet, daß** das Verriegelungselement (3) durch Selbsthemmung in der Aussparung (10) gegen selbsttätiges Lösen gesichert ist.

## Claims

1. Locking element for locking components (2), for example built-in housings, in apertures or openings (7) of structural elements (6), for example walls or panels, having a guide pin (8) for rotatably or pivotably fastening to a marginal region (1) of the component (2) and having a stop and retaining face (H) for locking engagement with the structural element (6), **characterized in that** the locking element comprises a plurality of planar retaining faces (H1, ... H7) at varying distances (A₁, ... A₇) from the guide pin (8) or its axis of rotation or pivot axis (SA), there retaining faces being arranged at the edge of a plate (13), which can be rotated or pivoted about the pivot axis (SA), and being able to be brought into the locking position against the structural element (6) by rotating or pivoting the locking element (3).

2. Locking element according to Claim 1, **characterized in that** support pins (12) protrude from the pivotable plate (13) in the same direction as the guide pin (8).

3. Locking element according to either of the preceding claims, **characterized in that** the guide pin (8) has a resilient retaining barb (9) by means of which it engages behind a guide element of the component (2).

4. Locking element according to one of the preceding claims, **characterized in that** the guide pin (8) can be placed under spring preloading by means of a leaf spring (11).

5. Locking element according to one of Claims 2 to 4, **characterized in that** the rotatable or pivotable plate (13) is designed as an eccentric disc.

6. Locking device having a locking element according to one of the preceding claims, **characterized in that** the guide pin (8) is inserted in an aperture (10) in the marginal region (1) of the component (2) belonging to the locking device, which component has an elastomeric seal (4) which serves as an abutment for the structural element (6) upon locking by means of one of the retaining faces (H1, ... H7) of the locking element (3).

7. Locking device according to Claim 6, **characterized in that** a tongue serving as a leaf spring (11) is formed on the component (2) in the region of the aperture (10).

8. Locking device according to Claim 7, **characterized in that** the tongue brings the locking element into the locking position and serves as a stop and counter-bearing for the guide pin (8).

9. Locking device according to one of Claims 6 to 8, **characterized in that** the locking element (3) is secured against automatic release in the aperture (10) by self-locking.

## Revendications

1. Élément de verrouillage pour le verrouillage de pièces de construction (2), par exemple de boîtiers encastrables, dans des évidements ou des trous (7) d'éléments de construction (6), par exemple des parois ou des plaques, avec un tenon de guidage (8) pour la fixation tournante ou pivotante sur une zone de bord (1) de la pièce de construction (2) et avec une surface de butée et de maintien (H) pour le montage verrouillant sur l'élément de construction (6), **caractérisé en ce que** l'élément de verrouillage présente plusieurs surfaces de maintien planes (H1 à H7) qui sont à différentes distances (A₁ à A₇) du tenon de guidage (8) ou de son axe de rotation ou de pivotement (SA), qui sont disposées sur le bord d'une plaque (13) tournante ou pivotante autour de l'axe de pivotement (SA) et qui peuvent être amenées en position de verrouillage sur l'élément de construction (6) par une rotation ou un pivotement de l'élément de verrouillage (3).

2. Élément de verrouillage selon la revendication 1, **caractérisé en ce que** des tenons de soutien (12) font saillie, dans la même direction que le tenon de guidage (8), de la plaque pivotante (13).

3. Élément de verrouillage selon l'une des revendications précédentes, **caractérisé en ce que** le tenon de guidage (8) comporte un panneton de maintien (9) qui fait ressort et avec lequel il saisit par-derrière un élément de guidage de la pièce de construction (2).

4. Élément de verrouillage selon l'une des revendications précédentes, **caractérisé en ce que** le tenon de guidage (8) peut être placé sous une précontrainte de ressort au moyen d'un ressort à lame (11) .

5. Élément de verrouillage selon l'une des revendications 2 à 4, **caractérisé en ce que** la plaque tournante ou pivotante (13) est conçue comme un disque excentrique.

6. Dispositif de verrouillage avec un élément de verrouillage selon l'une des revendications précédentes, **caractérisé en ce que** le tenon de guidage (8) est placé dans un évidement (10) dans la zone de bord (1) de la pièce de construction (2) appartenant au dispositif de verrouillage, laquelle pièce comporte un joint en élastomère (4) qui sert de butée pour l'élément de construction (6) lors du verrouillage par l'une des surfaces de maintien (H1 à H7) de l'élément de verrouillage (3).

7. Dispositif de verrouillage selon la revendication 6, **caractérisé en ce qu'**une languette servant de ressort à lame (11) est conçue sur la pièce de construction (2) dans la zone de l'évidement (10).

8. Dispositif de verrouillage selon la revendication 7, **caractérisé en ce que** la languette amène l'élément de verrouillage en position de verrouillage et sert de butée et de contre-butée pour le tenon de guidage (8).

9. Dispositif de verrouillage selon l'une des revendications 6 à 8, **caractérisé en ce que** l'élément de verrouillage (3) est protégé contre retrait spontané par auto-blocage dans l'évidement (10).
